# EUROPEAN PATENT SPECIFICATION

(11) **EP 3 776 152 B1**
(45) Date of publication and mention of the grant of the patent: **13.03.2024**
(21) Application number: 19717375.0
(22) Date of filing: 27.03.2019
(51) Int. Cl.: G06F 3/048, B60K 37/02, G02B 27/01, G01P 1/10, B60K 35/00, G01P 1/08

(54) **IMAGE CONTROL APPARATUS, DISPLAY APPARATUS, MOVABLE BODY, AND IMAGE CONTROL METHOD**
BILDSTEUERUNGSVORRICHTUNG, ANZEIGEVORRICHTUNG, BEWEGLICHER KÖRPER UND BILDSTEUERUNGSVERFAHREN
APPAREIL DE COMMANDE D'IMAGE, APPAREIL D'AFFICHAGE, CORPS MOBILE ET PROCÉDÉ DE COMMANDE D'IMAGE

(30) Priority: 29.03.2018 JP 2018066210; 20.03.2019 JP 2019053305
(43) Date of publication of application: 17.02.2021
(73) Proprietor: Ricoh Company, Ltd., Tokyo 143-8555 (JP)
(72) Inventor: YAMAGUCHI, Hiroshi, Tokyo 143-8555 (JP); SAISHO, Kenichiroh, Tokyo 143-8555 (JP); KUSANAGI, Masato, Tokyo 143-8555 (JP); SUZUKI, Yuuki, Tokyo 143-8555 (JP); KATAGIRI, Keita, Tokyo 143-8555 (JP)
(74) Representative: J A Kemp LLP
(86) International application number: PCT/JP2019/013251
(87) International publication number: WO 2019/189393

(56) References cited:
- US-A1- 2013 099 914
- US-A1- 2014 182 508
- US-A1- 2015 109 756
- US-A1- 2018 012 489

## Description

The present invention relates to an image control apparatus, a display apparatus, a movable body, and an image control method.

Development of a head-up display (HUD) installed in a movable body such as a vehicle, a ship, an aircraft, and an industrial robot, etc., is in progress. The HUD directly projects information to human vision, and provides the occupant (driver, passenger, etc.) with various kinds of information including images. In the HUD, the generated light image is diffracted in a direction toward the occupant by the windshield or a combiner, etc., and is displayed as if the image exists at a virtual image position in front of the occupant's line of sight. As the displayed image, there is known an image for displaying an arc-shaped or trapezoidal-shaped line segment that has an overall shape protruding upward (see, for example, Patent Literature 1).

PTL 1: WO2014/174575. US 2015/109756 A1 discloses an apparatus including a controller configured to detects a current driving state of a mobile object in real time to generate a control signal with respect to a display method including a brightness degree, a brightness region, and a color of the scale. US 2018/012489 A1 discloses a vehicular display control apparatus including a switching control portion that switches a speed display indicating a traveling speed to an emphasized display in a case when a condition determination portion determines that a deviation prediction condition has been established, and also when a speed difference determination portion determines that a speed difference is a switching determination value or larger. US 2014/182508 A1 discloses a speed displaying device including a speedmeter having a scale and a controller that controls to display a pointer pointed position which indicates a position of current speed of the vehicle in the scale of the speedometer, a speed setting position which indicates a position of the target speed in the scale of the speedometer, and a speed difference region which indicates the size of the difference between the current speed and the target speed with an area on the speed meter. US 2013/099914 A1 discloses a speedometer display mode extraction unit configured to extract a speedometer display mode corresponding to the legal speed limit of the road among the number of differently set speedometer display modes depending upon the legal speed limit of the road, and a display unit configured to automatically change a previously displayed speedometer display modes to the extracted speedometer display mode.

The arc-shaped or trapezoidal-shaped line segment protruding upward is output such that the width in the left-right direction of the arc or trapezoid, when viewed from the driver's field of view, represents the vehicle width on the road. This line segment display functions as a driving support tool for a driver who is inexperienced in terms of the vehicle width spacing, but driving related information other than the vehicle width is not presented. Furthermore, it is not sufficiently taken into consideration how to display the driving related information to the occupant with good visibility.

Among the pieces of driving related information, the speed related information is information that is of particular interest to the occupant; however, this speed related information changes from moment to moment depending on the situation. There is a need for a method of displaying images that enables the occupant to easily recognize the speed related information.

An object of the present invention is to provide an image control technology that enables an occupant of a moving body to recognize the difference between the present traveling speed and other speed related information, with good visibility.

An aspect of the present invention provides an image control apparatus installed in a movable body, a display apparatus, a moveable body, an image control method and a program as specified in the claims.

According to the present disclosure, an occupant of a moving body is able to recognize the difference between the present traveling speed and other speed related information, with good visibility.

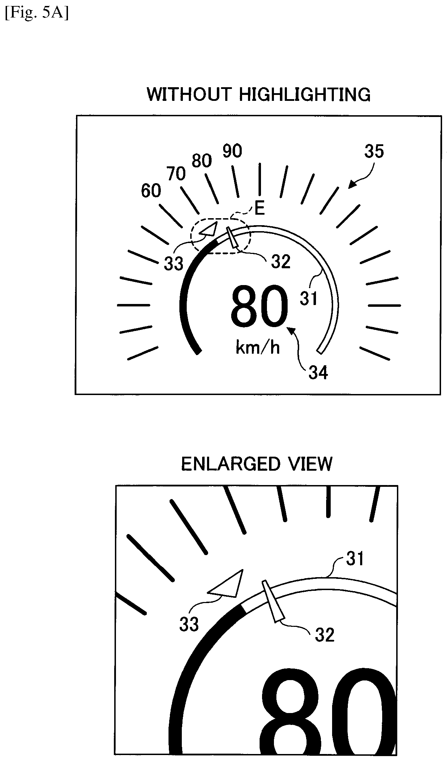

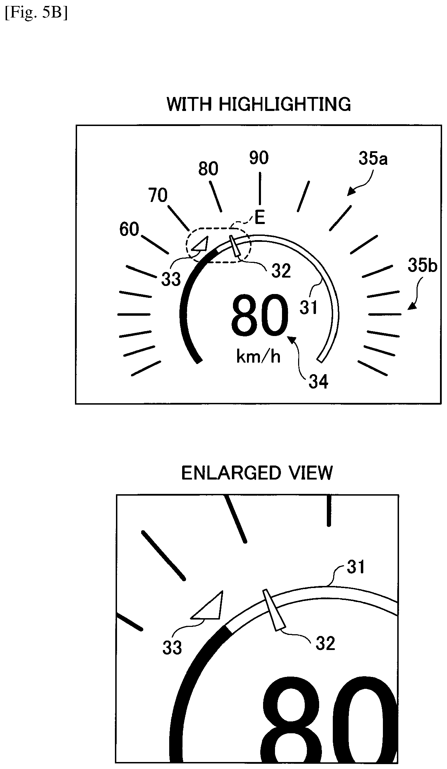

The invention is defined in the independent claims. The invention as claimed is best understood in light the embodiment described in the context of Figures 5A and 5B. Other embodiments described herein do not necessarily describe the complete combination of features as claimed, but are useful for understanding the invention as claimed.
[fig.1A] FIG. 1A is a schematic diagram illustrating an automobile equipped with a HUD as an example of a movable body equipped with a display apparatus according to an embodiment of the present invention.
[fig.1B] FIG. IB is a diagram illustrating an arrangement example of a projection area according to an embodiment of the present invention.
[fig.2] FIG. 2 is a hardware configuration diagram of a display apparatus according to an embodiment of the present invention.
[fig.3] FIG. 3 is a schematic diagram illustrating a connection relationship between a display apparatus and other electronic devices mounted installed in a movable body according to an embodiment of the present invention.
[fig.4] FIG. 4 is a functional block diagram of an image control apparatus of a display apparatus according to an embodiment of the present invention.
[fig.5A] FIG. 5A is a diagram illustrating an example of highlighting according to an embodiment of the present invention.
[fig.5B] FIG. 5B is a diagram illustrating an example of highlighting according to an embodiment of the present invention.
[fig.6A] FIG. 6A is a diagram illustrating an example of the transition from regular display to highlighting.
[fig.6B] FIG. 6B is a diagram illustrating an example of the transition from regular display to highlighting.
[fig.6C] FIG. 6C is a diagram illustrating an example of the transition from regular display to highlighting.
[fig.7] FIG. 7 is a diagram illustrating an example of the transition from normal display to highlighting.
[fig.8] FIG. 8 is a diagram illustrating another example of highlighting.
[fig.9] FIG. 9 is a flowchart of a display control method.

### Description of Embodiments

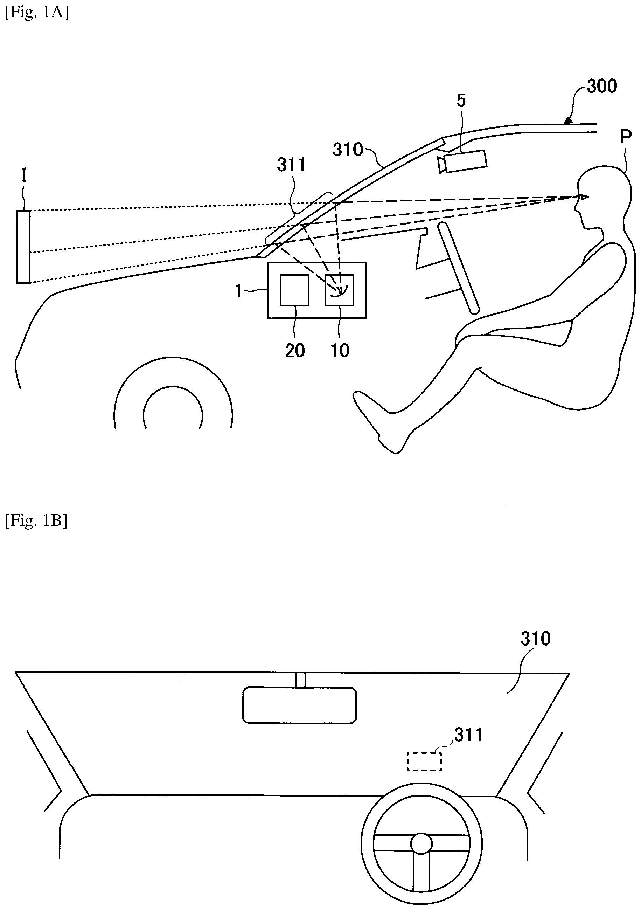

FIG. 1A schematically illustrates an automobile 300 as an example of a movable body in which a display apparatus 1 is installed. The display apparatus 1 is an on-vehicle head-up display (hereinafter, abbreviated as "HUD") in this example. The movable body in which the display apparatus 1 is installed is not limited to the automobile 300, and the display apparatus 1 can be installed in a movable body such as a vehicle, a ship, an aircraft, or an industrial robot. The automobile 300 may be a vehicle capable of adaptive cruise control (ACC: semi-automatic traveling), or may be a vehicle without an ACC function.

The display apparatus 1 is set, for example, on the dashboard or in the dashboard of the automobile 300, and the display apparatus 1 projects a light image to a predetermined projection area 311 of a windshield 310 in front of the occupant P (driver, passenger, etc.).

The display apparatus 1 includes an optical apparatus 10 and a control apparatus 20. The control apparatus 20 mainly generates image data of an image to be projected onto the windshield 310 and controls the display. The optical apparatus 10 projects an image formed based on the generated image data, onto the projection area 311 of the windshield 310. The configuration of the optical apparatus 10 is not directly related to the present invention, and thus the detailed configuration is not illustrated. For example, as described later, the optical apparatus 10 may include a laser light source, a light scanning device in which laser light output from the laser light source is two-dimensionally scanned on a screen, and a projection optical system (for example, a concave mirror, etc.) for projecting image light of an intermediate image, formed on a screen, onto the projection area 311 of the windshield 310. By projecting the image light onto the projection area 311, the driver is made to visually recognize a virtual image. Note that, instead of the laser light source, the screen, and the light scanning device, a light emitting diode (LED) or the like may be used as the light source, and a liquid crystal element or a Digital Mirror Device (DMD) element may be used as an image forming unit.

The projection area 311 of the windshield 310 is formed of a transmission/reflection member that reflects some parts of the light components and transmits other parts of the light components. The light image formed on the screen is projected by a projection optical system included in the optical apparatus 10, and is then reflected by the projection area 311 and travels toward the occupant P. When the reflected light enters the pupils of the occupant P in the light paths indicated by the broken lines, the occupant P visually recognizes the image projected on the projection area 311 of the windshield 310. At this time, the occupant P perceives as if the light image enters his or her pupils from a virtual image position I, through the light paths indicated by the dotted lines. The displayed image is recognized as if the image exists at the virtual image position I.

FIG. 1B is a diagram illustrating an arrangement example of the projection area 311. The projection area 311 is, for example, a relatively small area positioned slightly below the front position of the windshield 310 when viewed from the driver's seat. Line segments connecting the viewpoint of the occupant P and the virtual image position I are included in the range of the projection area 311.

Although a camera 5 is installed in the automobile 300 in addition to the display apparatus 1, the camera 5 is not essential. The camera 5 captures, for example, an image of an environment such as the front or the side of the automobile 300. The camera 5 may measure the inter-vehicle distance between the automobile 300 and a preceding vehicle in conjunction with an ACC mode. From the image acquired by the camera 5, speed related information such as a speed sign may be extracted and used for highlighted display control according to the embodiment. Details of the highlighted display control based on the speed related information will be described later with reference to FIG. 5A and onwards.

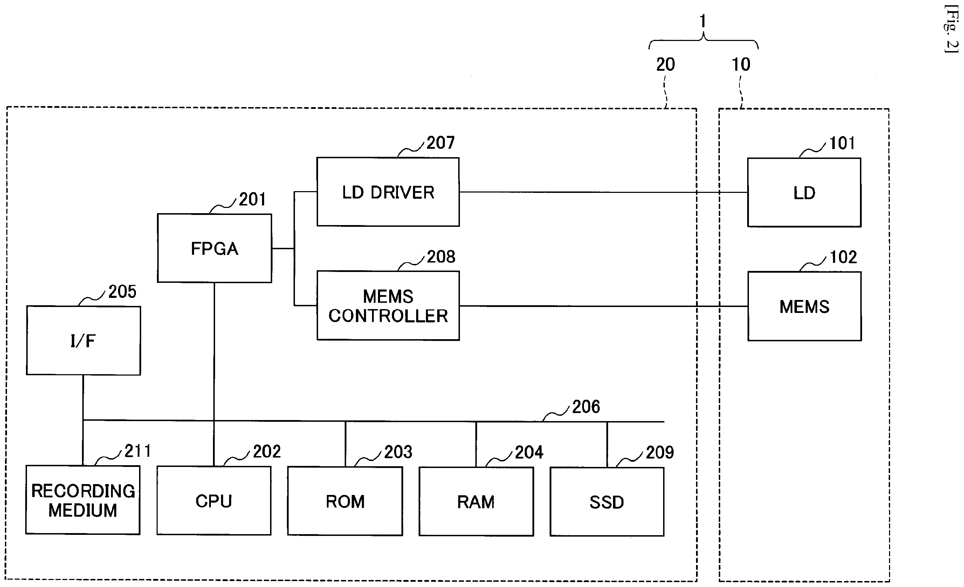

FIG. 2 is a hardware configuration example of the display apparatus 1 according to the embodiment. The optical apparatus 10 of the display apparatus 1 includes a laser diode (LD) 101 as a light source and a Micro Electro Mechanical System (MEMS) 102 as a light scanning device. The LD 101 includes, for example, laser elements that output light of red (R), green (G), and blue (B). The MEMS 102 two-dimensionally scans the laser light output from the LD 101 on a screen, etc., to render a light image. As the light scanning device, a polygon mirror or a galvanometer mirror, etc., may be used besides the MEMS. The screen may be formed of a micro lens array or a micro mirror array, etc.

The control apparatus 20 includes a field-programmable gate array (FPGA) 201, a central processing unit (CPU) 202, a read-only memory (ROM) 203, a random access memory (RAM) 204, an interface (hereinafter referred to as "I/F") 205, a bus line 206, an LD driver 207, a MEMS controller 208, and a solid state drive (SSD) 209 as an auxiliary storage device. Furthermore, a recording medium 211 that can be detachably attached may be included.

The FPGA 201 controls the operation of the LD driver 207 and the MEMS controller 208. The LD driver 207 generates and outputs a drive signal for driving the LD 101 under the control of the FPGA 201. The drive signal controls the light emission timing of each of the laser elements that emit light of R, G, and B. The MEMS controller 208 generates and outputs a MEMS control signal under control of the FPGA 201, and controls the scan angle and scan timing of the MEMS 102. Instead of the FPGA 201, another logic device such as a programmable logic device (PLG) may be used.

The CPU 202 controls the overall image data processing of the display apparatus 1. The ROM 203 stores various programs including programs executed by the CPU 202 to control each function of the display apparatus 1. The RAM 204 is used as a work area of the CPU 202.

The I/F 205 is an interface for communicating with an external controller, etc., and is connected to, for example, a vehicle navigation device, and various sensor devices via a Controller Area Network (CAN) of the automobile 300. The camera 5 for capturing the traveling environment of the vehicle through the windshield 310, may be connected to the I/F 205.

The display apparatus 1 can read and write information in the recording medium 211 via the I/F 205. An image processing program for implementing the processing in the display apparatus 1 may be provided by the recording medium 211. In this case, the image processing program is installed in the SSD 209 from the recording medium 211 via the I/F 205. The installation of the image processing program is not necessarily performed with the recording medium 211, and may be downloaded from another computer via a network. The SSD 209 stores the installed image processing program and also stores necessary files and data.

Examples of the recording medium 211 include portable recording media such as a flexible disk, a Compact Disk Read-Only Memory (CD-ROM), a digital versatile disc (DVD), a secure digital (SD) memory card, and a Universal Serial Bus (USB) memory. Furthermore, as the auxiliary storage device, a Hard Disk Drive (HDD) or a flash memory, etc., may be used instead of the SSD 209. The auxiliary storage device such as the SDD 209 and the recording medium 211 are both computer readable recording media.

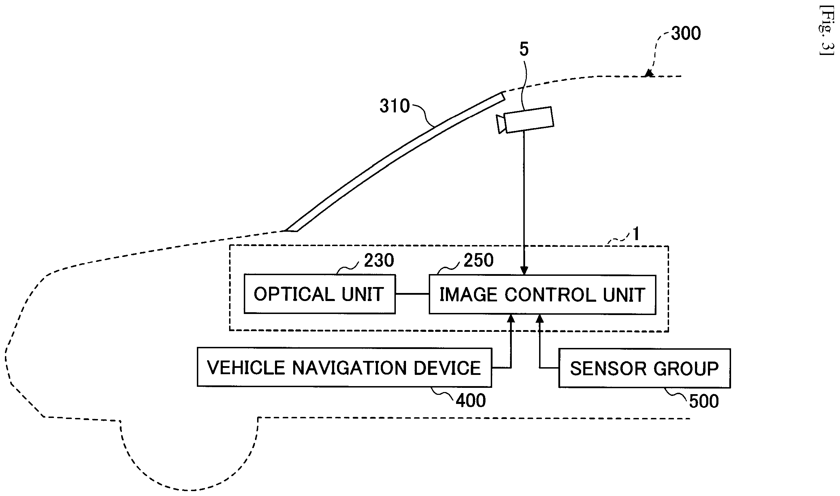

FIG. 3 is a schematic diagram illustrating a connection relationship between the display apparatus 1 of the embodiment and other electronic devices installed in the automobile 300. The display apparatus 1 includes an optical unit 230 and an image control unit 250. The optical unit 230 broadly corresponds to the optical apparatus 10, but the FPGA 201, the LD driver 207, and the MEMS controller 208 may be included in the optical unit 230. The image control unit 250 is implemented by at least a part of the control apparatus 20.

The display apparatus 1 is connected to an electronic device such as a vehicle navigation device 400, a sensor group 500, and the camera 5 via the I/F 205 and a CAN. The display apparatus 1 acquires external information from these electronic devices and uses the information as a determination material as to whether to perform highlighting (highlighted display). The vehicle navigation device 400 includes navigation information such as a road map, global positioning system (GPS) information, a speed limit area, traffic regulation information, the speed limit of each road, and the like, and generates a route navigation image according to the user's input operation. The image control unit 250 uses at least a part of the navigation information included in the vehicle navigation device 400 to determine whether highlighting is necessary, the timing of performing highlighting, and the like.

The sensor group 500 includes an acceleration sensor, a gyro sensor, a laser radar device, a weather sensor, a brightness sensor, and the like, and detects information pertaining to the automobile 300 such as the behavior, the state, the surrounding state, and the distance to a vehicle traveling ahead, etc. The information obtained by the sensor group 500 is supplied to the image control unit 250, and at least a part of the sensor information is used for the determination of highlighting.

The camera 5 is a monocular camera, a stereo camera, an omnidirectional camera or the like, and detects the condition of the traveling path, a vehicle ahead, a bicycle, a person, a sign, and the like. The information acquired by the camera 5 is supplied to the image control unit 250, and at least a part of the camera information is used for the determination of highlighting.

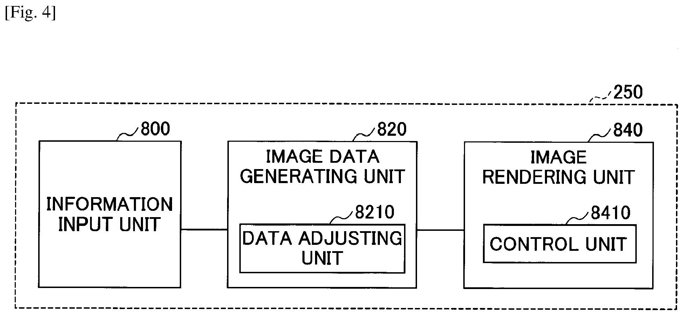

FIG. 4 is a functional block diagram of the image control unit 250. The image control unit 250 includes an information input unit 800, an image data generating unit 820, and an image rendering unit 840. The information input unit 800 is implemented by, for example, the I/F 205, and inputs information from the vehicle navigation device 400, the sensor group 500, and the camera 5. The information input unit 800 receives internal information including the present speed of the automobile 300, from the sensor group 500 via the CAN or the like. Furthermore, speed related information such as the speed limit, speed regulation information, the set speed in the automatic driving mode, etc., is received from the camera 5, the vehicle navigation device 400, the CAN, and the like.

The image data generating unit 820 includes a data adjusting unit 8210. The image data generating unit 820 generates data of an image to be projected on the projection area 311, and determines whether to generate image data used for highlighting, based on the information input from the information input unit 800. When it is determined that highlighting is necessary, the data adjusting unit 8210 adjusts the generated image data to be image data used for highlighting.

The image rendering unit 840 includes a control unit 8410 and controls the operation of the optical apparatus 10 according to the image data generated by the image data generating unit 820. The image rendering unit 840 may be implemented by the FPGA 201, the LD driver 207, and the MEMS controller 208. When the image data generating unit 820 generates data of a highlight image, the image rendering unit 840 forms a light image based on the data of the highlight image, and the formed light image is projected on the projection area 311 of the windshield 310. Specific examples of the highlight image will be described below.

### <Example of highlighting>

FIGS. 5A and 5B are diagrams illustrating examples of switching to highlighting. FIG. 5A illustrates a regular display without highlighting and an enlarged view of the regular display. FIG. 5B illustrates a highlighted display and an enlarged view of the highlighted display. These images may be displayed as if they were present at the virtual image position I in front of the windshield 310, as viewed from the occupant, or may be displayed on a physical display surface such as an instrument panel.

In FIG. 5A, in the regular display mode, the present speed of the automobile 300 is expressed by an arc-shaped speed gauge 31. A pointer 32 is displayed at the corresponding position on the speed gauge 31 to indicate the present vehicle speed. The present vehicle speed may be displayed on the inside of the speed gauge 31 with characters 34 as "80 km/h". Equally spaced scale marks 35 may be displayed along the arc of the speed gauge 31.

In this example, numerical values are displayed only on some of the scale marks 35, that is, on scale marks near the present vehicle speed; the numerical values may be displayed at regular intervals (for example, every 20 km). Either one of the display of the numerical values of the scale marks 35, or the vehicle speed display by the characters 34, may be omitted. Furthermore, the scale marks 35 may be omitted.

In addition to the pointer 32 indicating the pointer setting speed indicating the present vehicle speed, an indicator 33 indicating the reference speed is displayed outside the speed gauge 31. The reference speed is speed information serving as a reference for traveling, such as a setting speed of the ACC, a speed limit of a road, a regulatory speed temporarily set by speed regulations, and the like. In this example, it is assumed that the speed of the ACC mode is set to "70 km/h".

When the position of the indicator 33 indicating the reference speed and the position of the pointer 32 indicating the present vehicle speed are close, it may be difficult for the occupant to recognize the difference instantaneously. Therefore, as illustrated in FIG. 5B, highlighting is performed so that the intervals between the scale marks 35 are expanded around the present vehicle speed, and the difference between the present vehicle speed and the ACC set speed can be recognized at a glance.

In FIG. 5B, the area around the present vehicle speed "80 km/h" is set as an enlarged area E, the intervals between the scale marks 35 are expanded, to display, in an enlarged manner, the difference between the present vehicle speed and the ACC set speed. By expanding the intervals between the scale marks 35 in the enlarged area E, the intervals between the scale marks are reduced in other parts, and enlarged scale marks 35a and reduced scale marks 35b are arranged along the speed gauge 31.

The intervals between the scale marks 35 do not necessarily have to be symmetrically or equally expanded on both sides of the pointer 32 representing the present vehicle speed; for example, the intervals between the scale marks 35 may be unevenly expanded in the enlarged area E including at least one of the present vehicle speed and the reference speed (the ACC set speed in this example). The scale marks 35 may be omitted, and only the difference between the indicator 33 and the pointer 32 may be displayed in a highlighted manner.

As illustrated in FIG. 5B, the difference is highlighted by expressing a minute difference as a large difference or interval. The image is displayed in a relatively small area of the projection area 311 of the windshield 310; however, by performing display control to highlight the difference, the occupant can easily visually recognize the difference between the present vehicle speed and the reference speed. In particular, when the present vehicle speed approaches the reference speed and the difference from the reference speed becomes small, the interval between the pointer 32 and the indicator 33 becomes narrow, making it difficult to recognize the difference. By displaying the difference in a highlighted manner as illustrated in FIG. 5B, the occupant can recognize that the present vehicle speed is approaching the reference speed.

The switching from the display of the regular mode of FIG. 5A to the highlighted display of FIG. 5B, may be performed according to an operation input by the occupant from a touch panel provided on the steering wheel or the dashboard, etc., or may be automatically performed on condition of the occurrence of a predetermined event. For example, the event to be the condition for switching the display may be when the present vehicle speed exceeds an allowable range and approaches the reference speed (when the difference from the reference speed is reduced to less than or equal to a threshold), when the present vehicle speed exceeds the reference speed, or when the acceleration level of the present vehicle speed exceeds a predetermined value, etc.

The reference speed is not limited to the ACC set speed. For example, the road speed limit may be used as the reference speed. When traveling on an expressway, the reference speed may be set to 100 km/h, and when traveling in an urban area, the reference speed may be set to 50 km/h. Such road information may be acquired from the vehicle navigation device 400, the camera 5, and the like. When certain conditions related to the vehicle speed are satisfied, or when there is a user input, the display of the scale marks 35 is controlled, and highlighting is performed so that the difference between the present vehicle speed and the reference speed can be easily viewed.

The display control can be performed, for example, by storing an object including the speed gauge 31, the pointer 32, the indicator 33, and the scale marks 35 in the ROM 203 in advance, and performing image adjustment to expand the intervals between the scale marks 35 in the area around the present vehicle speed and/or the reference speed at the timing of highlighting.

The characters 34 indicating the present vehicle speed may not always be displayed. The display may be turned off after being displayed for a fixed time (for example, several seconds) after the speed change. Furthermore, the numerical values appended to the scale marks 35 may not always be displayed, and may be displayed at predetermined time intervals.

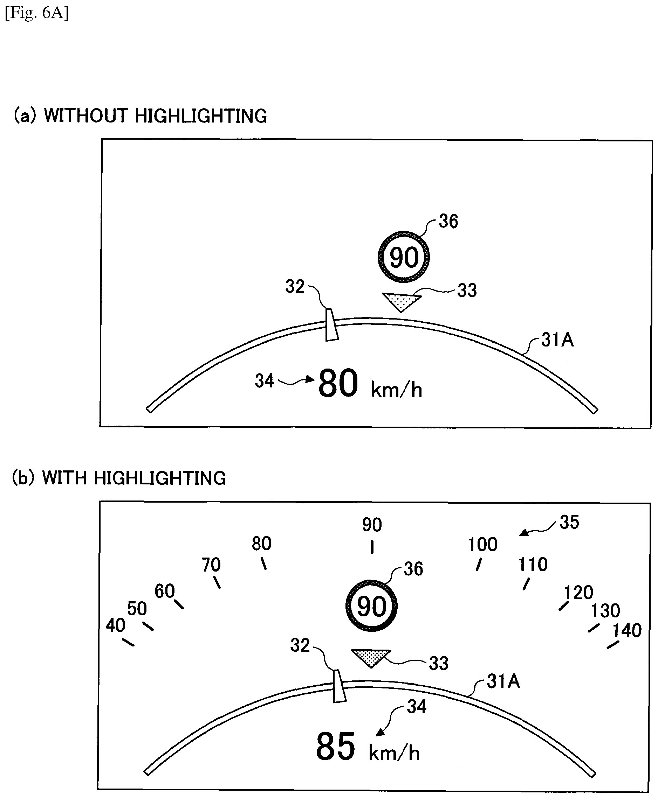

FIGS. 6A to 6C are diagrams illustrating other examples of the transition from the regular display to the highlighting. In (a) of FIG. 6A, a regular display mode without highlighting is illustrated. The pointer 32 indicating the present vehicle speed is displayed on an arc-shaped speed gauge 31A having a large radius of curvature, and the characters 34 indicating the vehicle speed of 80 km/h are displayed near the pointer 32 inside the speed gauge 31A. For example, when the speed limit represented by a speed mark 36 is 90 km/h, when traveling at 80 km/h within the speed limit, the display mode may not be changed and regular display may be performed. The regular display is, for example, a display in the default state, and may be a display on the instrument panel or an initial display state when displaying the image at the virtual image position in a space in front of the automobile 300.

For example, when the present moving speed becomes 85 km/h and approaches the speed limit, and the difference from the speed limit decreases, the display mode is changed from the regular display to the highlighted display. For example, as illustrated in (b) of FIG. 6A, the intervals between the scale marks 35 are expanded near the speed limit. The highlighted display is not limited to this example; as described below, at least one of the characters 34 and the pointer 32 representing the present vehicle speed may be enlarged, or at least one of the speed mark 36 and the indicator 33 may be displayed in color, etc., to increase the degree of highlighting the difference.

For example, the indicator 33 may be displayed in an eye-catching color such as yellow or orange, or the numerical value of the reference speed may be surrounded by a color circle to display the speed mark 36 like a road sign. By this display, the occupant can recognize the difference between the present vehicle speed and the reference speed with good visibility.

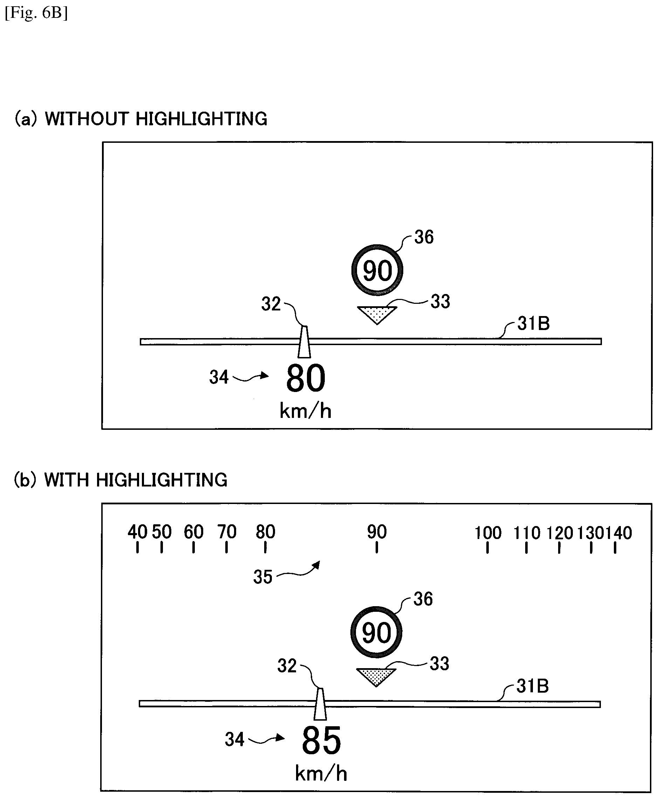

In (a) of FIG. 6B, a regular display mode without highlighting is illustrated. The pointer 32 indicating the present vehicle speed is disposed on a speed gauge 31B formed of a straight line or a bar in the horizontal direction, and in the vicinity of the pointer 32, the characters 34 indicating numerical values of the vehicle speed are displayed. Along the speed gauge 31B, the indicator 33 indicating a reference speed and the speed mark 36 are displayed. In this example as well, when the automobile 300 is traveling within the speed limit, regular display may be performed without changing the display mode. In the case of a horizontal display, when the vehicle speed approaches the reference speed, highlighted display may be performed as illustrated in (b) of FIG. 6B. The pointer 32 is moved from the left to the right as the speed increases, and the intervals between the scale marks 35 are expanded near the speed limit to highlight the difference. In addition to or instead of the aforementioned display, the display mode of at least one of the characters 34 and the pointer 32 may be changed, so that the occupant is urged to recognize this situation.

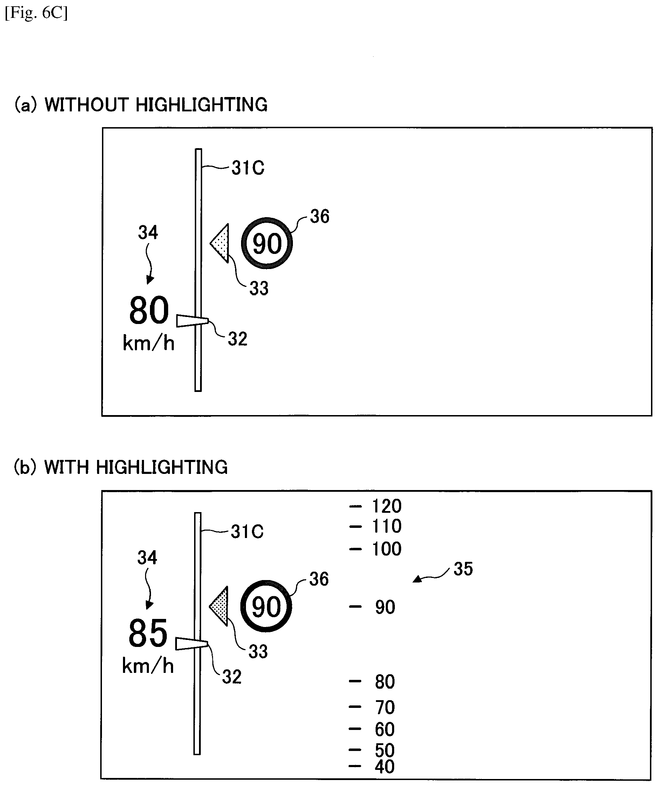

In (a) of FIG. 6C, a regular display mode without highlighting is illustrated. The pointer 32 indicating the present vehicle speed is disposed on a speed gauge 31C formed of a straight line or a bar in the vertical direction, and in the vicinity of the pointer 32, the characters 34 indicating a numerical value of the vehicle speed is displayed. Along the speed gauge 31C, the indicator 33 indicating the reference speed and the speed mark 36 are displayed. While the automobile 300 is travelling within the speed limit, regular display may be performed without changing the display mode. In the case of a vertical display, when the vehicle speed approaches or exceeds the reference speed, as illustrated in (b) of FIG. 6C, the pointer 32 is moved from the lower side to the upper side as the vehicle speed increases, and the intervals between the scale marks 35 are expanded near the speed limit to highlight the difference. In addition to or instead of the aforementioned display, the display mode of at least one of the characters 34 and the pointer 32 may be changed, so that the occupant is urged to recognize this situation.

Also in FIGS. 6B and 6C, in the case of highlighting, the indicator 33 may be displayed in color, or the speed mark 36 surrounded by a color circle may be displayed to further enhance the visibility.

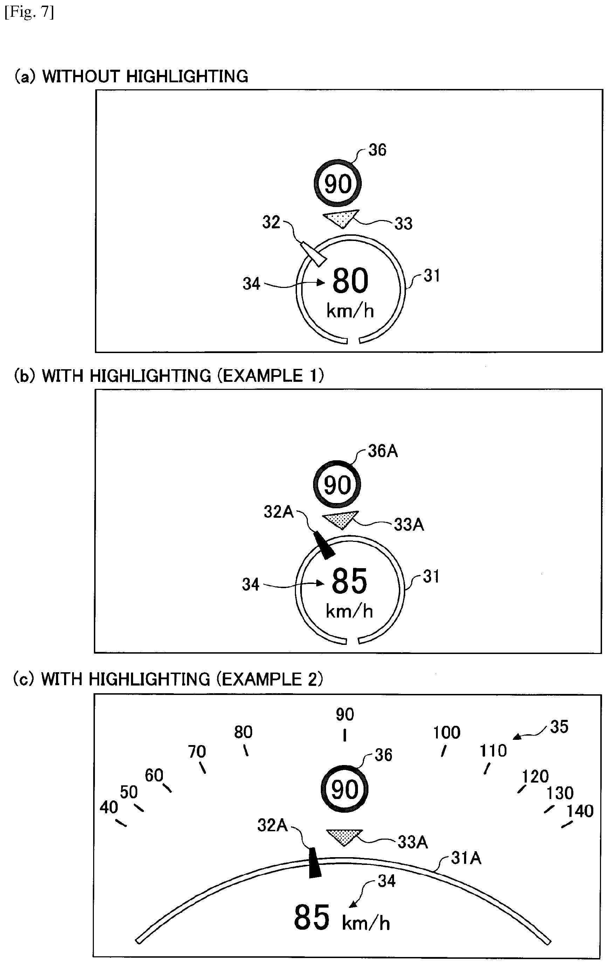

FIG. 7 illustrates an example of the transition from the regular display to the highlighting. In (a) of FIG. 7, regular display is illustrated. For example, the speed mark 36 of FIGS. 6A to 6C and the gauge of FIGS. 5A and 5B are combined. The pointer 32 indicating the present vehicle speed is displayed on the arc-shaped speed gauge 31 similar to a general speedometer, and the characters 34 indicating a numerical value are displayed inside the speed gauge 31. The reference speed is indicated by the indicator 33 and the speed mark 36.

When the present vehicle speed approaches the reference speed and the difference decreases more than an allowable range, highlighted display is performed as illustrated in (b) of FIG. 7. At least one of the reference speed mark 36A and the indicator 33A may be displayed in color, for example, so that it is highlighted that a pointer 32A is approaching the reference speed, and the visibility of the difference is enhanced. Furthermore, the visibility may be further enhanced by changing the color of the pointer 32A, displaying the pointer 32A to have a larger size, or the like.

In FIG. 7, (c) illustrates another example of highlighting the difference, when the difference between the reference speed and the present vehicle speed becomes small. In FIG. 7, (c) illustrates another example of highlighted display in the speed gauge 31A. The pointer 32A indicating the present vehicle speed is displayed on an arc-shaped speed gauge 31A having a relatively large radius of curvature, and the characters 34 indicating the vehicle speed "85km/h" are displayed in the vicinity of the pointer 32A inside the speed gauge 31A. For example, the scale marks 35 arranged in an arc shape are displayed outside the reference speed mark 36, and the intervals between the scale marks 35 are expanded near the reference speed to highlight that the pointer 32A is approaching the indicator 33A. Among the scale marks 35, the portion to be enlarged and highlighted may be displayed in color or may be blinked. The pointer 32A indicating the vehicle speed may also be displayed in color or in a blinking manner. This display is likely to alert the occupant particularly when the actual vehicle speed approaches the reference speed.

Examples of highlighting the change in the difference in a manner that can be easily recognized, when the difference between predetermined speed related information and the present speed becomes smaller, are not limited to the examples described above. The length of the pointer 32A may be extended in the radial direction of the speed gauge 31A to make it easy to recognize that the pointer 32A is approaching the reference speed mark 36. Characters 34B indicating the speed may be highlighted. Examples of highlighting of the characters 34B include, but are not limited to, changing the color of the characters 34B, changing the thickness of the characters 34B, adding an underline or a frame, changing the display position, and the like. It is not necessary to perform all of the operations of (c) in FIG. 7 for the highlighting; as long as it can be easily recognized that the present speed is approaching the speed limit, any one of the above highlighting operations may be performed.

Note that in any of the examples illustrated in FIGS. 5A to 7, the scale marks 35 may not be displayed. Further, when switching from the regular display to the highlighted display is performed continuously, the difference is continuously increased as the vehicle speed increases, and, therefore, it is possible to recognize the difference even without the scale marks.

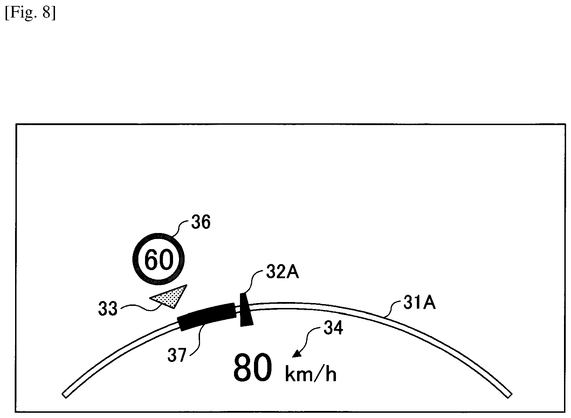

FIG. 8 illustrates another example of changing the expression of the portion indicating the difference between the present vehicle speed and the speed related information. FIG. 8 is another example of highlighting in the speed gauge 31A of FIG.6A. The pointer 32A indicating the present vehicle speed is displayed on the arc-shaped speed gauge 31A having a relatively large radius of curvature, and the characters 34 indicating the vehicle speed "80 km/h" are displayed in the vicinity of the pointer 32A inside the speed gauge 31A. On the outside of the speed gauge 31A, the indicator 33 indicating the position of the reference speed and the speed mark 36 indicating a numerical value are displayed.

In FIGS. 5A to 7, the difference is highlighted when the present speed approaches the reference speed, but in FIG. 8, the difference is highlighted when the present speed exceeds the reference speed. On the speed gauge 31A, the area from the indicator 33 to the pointer 32A is indicated by a continuous highlighting line segment 37. The highlighting line segment may be a color line segment or a blinking line segment. The pointer 32A indicating the vehicle speed may also be displayed in color or in a blinking manner. Note that in addition to the display as illustrated in FIGS. 5A to 7, when the reference speed is exceeded, the display as illustrated in FIG. 8 may be further performed.

In any of the examples illustrated in FIGS. 5A to 8, when the image is displayed to the occupant as if the image is present at the virtual image position I in front of the windshield 310, it is possible to reduce the movement of the viewpoint of the occupant for recognizing the speed related information. Even for speed related information displayed on a physical display surface such as an instrument panel, etc., by changing the display mode of the information indicating the difference between the present vehicle speed and the speed related information, the display can be highlighted and it is possible to urge the attention of the occupant more effectively.

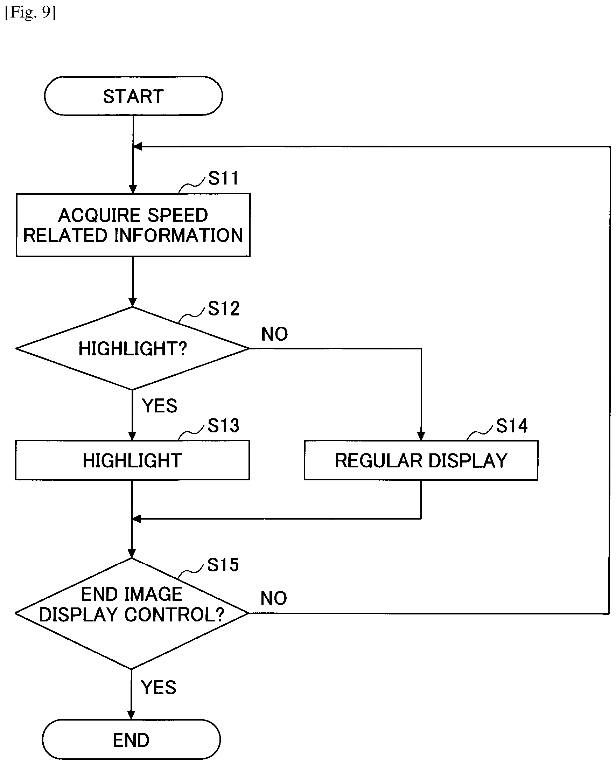

FIG. 9 is a flowchart of the display control method of the embodiment. The display control method is executed by, for example, the image control unit 250 of the display apparatus 1. First, the image control unit 250 acquires speed related information (step S11). The speed related information includes internal information including the present traveling speed of the automobile 300, and external information obtained from the camera 5, the vehicle navigation device 400, and the like. The ACC set speed is information set in the automobile 300, but may be included in the external information in the sense of being set from the outside.

The image control unit 250 determines whether to perform highlighting (step S12). Whether to perform highlighting is determined based on whether the present vehicle speed exceeds an allowable range and approaches the reference speed, whether the acceleration level of the present vehicle speed exceeds a predetermined level, or whether the user has input an instruction to perform highlighting. The determination of whether to perform highlighting (step S12) and the acquiring of the speed related information (step S11) may be performed in random order at the same time.

When highlighting is to be performed (YES in step S12), the display image is adjusted to generate and output image data for highlighting the difference between the present vehicle speed and the reference speed (step S13). The highlighting may be a display method in which the intervals between the scale marks 35 accompanying to the speed gauge 31 are partially expanded at the portion near the present vehicle speed, or a display method in which the speed mark 36 is disposed on the line segment to facilitate the comparison with the present vehicle speed, or a display method in which information is highlighted with thick lines, a color bar, or blinking, etc., when the present vehicle speed approaches the reference speed, as illustrated in FIGS. 5A to 7. Furthermore, the highlighting may be performed when the present vehicle speed exceeds the reference speed, as illustrated in FIG. 8.

When highlighting is not to be performed, (NO in step S12), regular display is performed (step S14). Thereafter, it is determined whether the image display control has ended (step S15). The image display control is ended, for example, when traveling is finished and the engine is turned off. Until the image display control is ended, steps S11 to S15 are repeated.

By this display control method, the display mode is changed, the difference between the present vehicle speed and the speed related information is highlighted, and the occupant can easily view the difference.

The highlighting step S13 may include the steps of generating data of a display image in which the present moving speed is displayed together with other speed related information, highlighting the difference between the present moving speed and other speed related information, and scanning the light for rendering the display image in which the difference is highlighted, at the predetermined projection area 311 of the automobile 300, to form a virtual image of the display image so as to be visible.

When the display control method is executed by a program, a program for display control may be stored in advance in the ROM 203 or the SSD 209, and the CPU 202 may read and execute the program. In this case, the CPU 202 executes at least the following processes.
(a) Generating data of a display image indicating the present moving speed of the movable body together with other speed related information.
(b) Changing the display mode related to the difference between the present moving speed and the speed indicated by other speed related information, in a case where a predetermined condition is satisfied.

The present invention is not limited to the embodiments described above. For example, as the optical apparatus 10, a panel method may be adopted instead of the laser scanning method. As a panel method, an imaging device such as a liquid crystal panel, a DMD panel, or a Vacuum Fluorescent Display (VFD), etc., may be used.

The projection area 311 of the windshield 310 may be provided with a combiner formed of a half-silvered mirror (half mirror, semitransparent mirror), or a hologram, etc. A light transmission/reflection type reflection film may be vapor-deposited on the surface of or between the layers of the windshield 310.

At least a part of each function of the display apparatus 1 may be implemented by cloud computing configured of one or more computers.

The present application is based on and claims the benefit of priority of Japanese Priority Patent Application No. 2018-066210, filed on March 29, 2018, and Japanese Priority Patent Application No. 2019-053305, filed on March 20, 2019.

### Reference Signs List

1 display apparatus
5 camera
10 optical apparatus
20 control apparatus
31, 31A, 31B, 31C speed gauge (first object)
32 pointer (second object)
33 indicator (third object)
35 scale marks
35a enlarged scale marks
35b reduced scale marks
250 image control unit (controller)
300 automobile (movable body)
310 windshield
311 predetermined projection area
800 information input unit
820 image data generating unit
840 image rendering unit
8210 data adjusting unit
8410 control unit

## Claims

1. An image control apparatus installed in a movable body, the image control apparatus comprising:
a controller (250) configured to generate data of a display image in which a present moving speed of the movable body is indicated together with other speed related information on a first object representing a speed gauge (31) comprising equally spaced scale marks (35), and further configured to change a display mode related to a difference between the present moving speed and a speed indicated by the other speed related information, upon detecting that a predetermined condition is satisfied;
**characterised in that** the controller (250) is further configured to change the display mode related to the difference by expanding the intervals between the scale marks (35) at a portion including at least the present moving speed and the speed indicated by the other speed related information.

2. The image control apparatus according to claim 1, wherein the other speed related information is a reference speed including at least one of an automatic travelling set speed and a speed limit, and the controller (250) is further configured to change the display mode of information indicating the difference between the present moving speed and the reference speed.

3. The image control apparatus according to claim 1 or 2, wherein the controller (250) is further configured to generate a second object indicating the present moving speed (32), and a third object (33) representing the other speed related information, and the controller is further configured to change the display mode of at least one of the second object (32) and the third object (33), upon detecting that the predetermined condition is satisfied.

4. The image control apparatus according to any one of claims 1 to 3, wherein the controller (250) is configured to generate a fourth object representing a scale, and displays, in an expanded manner, intervals between scale marks of the scale near the present moving speed or the speed indicated by the other speed related information, upon detecting that the present moving speed exceeds a predetermined range and approaches the speed indicated by the other speed related information.

5. The image control apparatus according to any one of claims 1 to 4, wherein the predetermined condition is at least one of
the present moving speed exceeding a predetermined range and approaching the speed indicated by the other speed related information, an acceleration level of the movable body exceeding a predetermined level,
the present moving speed exceeding the speed indicated by the other speed related information, and
an occupant of the movable body performing an operation.

6. A display apparatus (1) comprising:
the image control apparatus according to claim 1; and
a display configured to display the display image so as to be visible to an occupant of the movable body.

7. The display apparatus according to claim 6, wherein the display projects light forming the display image onto a predetermined projection area of the movable body, such that the display image is visible to the occupant.

8. The movable body in which the image control apparatus according to any one of claims 1 to 5 is installed.

9. An image control method performed by an image control apparatus installed in a movable body, the image control method comprising:
generating data of a display image in which a present moving speed of the movable body is indicated together with other speed related information on a speed gauge (31) comprising equally spaced scale marks (35); and
changing a display mode related to a difference between the present moving speed and a speed indicated by the other speed related information, upon detecting that a predetermined condition is satisfied;
**characterised in** the display mode related to the difference is changed by expanding the intervals between the scale marks (35) at a portion including at least the present moving speed and the speed indicated by the other speed related information.

10. A computer program product that causes an image control apparatus installed in a movable body to execute the steps of:
generating data of a display image in which a present moving speed of the movable body is indicated together with other speed related information on a speed gauge (31) comprising equally spaced scale marks (35); and
changing a display mode related to a difference between the present moving speed and a speed indicated by the other speed related information, upon detecting that a predetermined condition is satisfied;
**characterised in that** the display mode related to the difference is changed by expanding the intervals between the scale marks (35) at a portion including at least the present moving speed and the speed indicated by the other speed related information.

## Patentansprüche

1. Bildsteuereinrichtung, die in einem beweglichen Körper installiert ist, wobei die Bildsteuereinrichtung umfasst:
eine Steuervorrichtung (250), die dazu konfiguriert ist, Daten eines Anzeigebildes zu erzeugen, in dem eine aktuelle Bewegungsgeschwindigkeit des beweglichen Körpers zusammen mit anderen geschwindigkeitsbezogenen Informationen über ein erstes Objekt angezeigt wird, das ein Geschwindigkeitsmessgerät (31) darstellt, das gleichmäßig beabstandete Skalenmarkierungen (35) umfasst, und
ferner dazu konfiguriert ist, einen Anzeigemodus zu ändern, der sich auf eine Differenz zwischen der aktuellen Bewegungsgeschwindigkeit und einer Geschwindigkeit bezieht, die durch die anderen geschwindigkeitsbezogenen Informationen angezeigt wird, wenn erkannt wird, dass eine vorbestimmte Bedingung erfüllt wird;
**dadurch gekennzeichnet, dass** die Steuervorrichtung (250) ferner dazu konfiguriert ist, den Anzeigemodus, der sich auf die Differenz bezieht, zu ändern, indem die Intervalle zwischen den Skalenmarkierungen (35) an einem Abschnitt erweitert werden, der wenigstens die aktuelle Bewegungsgeschwindigkeit und die durch die anderen geschwindigkeitsbezogenen Informationen angezeigte Geschwindigkeit beinhaltet.

2. Bildsteuereinrichtung nach Anspruch 1, wobei die anderen geschwindigkeitsbezogenen Informationen eine Referenzgeschwindigkeit sind, die wenigstens eine von einer automatisch fahrenden Sollgeschwindigkeit und einer Geschwindigkeitsgrenze beinhaltet, und
die Steuervorrichtung (250) ferner dazu konfiguriert ist, den Anzeigemodus der Informationen zu ändern, der die Differenz zwischen der aktuellen Fahrgeschwindigkeit und der Referenzgeschwindigkeit anzeigt.

3. Bildsteuereinrichtung nach Anspruch 1 oder 2, wobei
die Steuervorrichtung (250) ferner dazu konfiguriert ist, ein zweites Objekt, das die aktuelle Bewegungsgeschwindigkeit (32) anzeigt, und ein drittes Objekt (33) zu erzeugen, das die anderen geschwindigkeitsbezogenen Informationen darstellt, und
die Steuervorrichtung ferner dazu konfiguriert, den Anzeigemodus wenigstens eines des zweiten Objekts (32) und des dritten Objekts (33) zu ändern, wenn erkannt wird, dass die vorbestimmte Bedingung erfüllt ist.

4. Bildsteuereinrichtung nach einem der Ansprüche 1 bis 3, wobei die Steuervorrichtung (250) dazu konfiguriert ist, ein viertes Objekt zu erzeugen, das eine Skala darstellt, und
auf eine erweiterte Weise Intervalle zwischen Skalenmarkierungen der Skala in der Nähe der aktuellen Bewegungsgeschwindigkeit oder der durch die anderen geschwindigkeitsbezogenen Informationen angezeigten Geschwindigkeit anzuzeigen, wenn erkannt wird, dass die aktuelle Bewegungsgeschwindigkeit einen vorbestimmten Bereich überschreitet und sich der durch die anderen geschwindigkeitsbezogenen Informationen angezeigten Geschwindigkeit nähert.

5. Bildsteuereinrichtung nach einem der Ansprüche 1 bis 4, wobei die vorbestimmte Bedingung wenigstens eine ist von:
die aktuelle Bewegungsgeschwindigkeit überschreitet einen vorbestimmten Bereich und nähert sich der durch die anderen geschwindigkeitsbezogenen Informationen angezeigten Geschwindigkeit, ein Beschleunigungsniveau des beweglichen Körpers überschreitet ein vorbestimmtes Niveau,
die aktuelle Bewegungsgeschwindigkeit überschreitet die durch die anderen geschwindigkeitsbezogenen Informationen angezeigte Geschwindigkeit, und
ein Insasse des beweglichen Körpers führt einen Vorgang durch.

6. Anzeigeeinrichtung (1), umfassend:
die Bildsteuereinrichtung nach Anspruch 1; und
eine Anzeige, die dazu konfiguriert ist, das Anzeigebild anzuzeigen, um für einen Insassen des beweglichen Körpers sichtbar zu sein.

7. Anzeigeeinrichtung nach Anspruch 6, wobei die Anzeige Licht, das das Anzeigebild ausbildet, auf eine vorbestimmte Projektionsfläche des beweglichen Körpers projiziert, sodass das Anzeigebild für den Insassen sichtbar ist.

8. Beweglicher Körper, in dem die Bildsteuereinrichtung nach einem der Ansprüche 1 bis 5 installiert ist.

9. Verfahren zum Bildsteuern, das von einer Bildsteuereinrichtung durchgeführt wird, die in einem beweglichen Körper installiert ist, wobei das Bildsteuerverfahren umfasst:
Erzeugen von Daten eines Anzeigebildes, in dem eine aktuelle Bewegungsgeschwindigkeit des beweglichen Körpers zusammen mit anderen geschwindigkeitsbezogenen Informationen auf einem Geschwindigkeitsmessgerät (31) angezeigt wird, die gleichmäßig beabstandete Skalenmarkierungen (35) umfasst; und
Ändern eines Anzeigemodus, der sich auf eine Differenz zwischen der aktuellen Bewegungsgeschwindigkeit und einer Geschwindigkeit bezieht, die durch die anderen geschwindigkeitsbezogenen Informationen angezeigt wird, wenn erkannt wird, dass eine vorbestimmte Bedingung erfüllt ist; und
**dadurch gekennzeichnet, dass** der Anzeigemodus, der sich auf die Differenz bezieht, geändert wird, indem die Intervalle zwischen den Skalenmarkierungen (35) in einem Abschnitt erweitert werden, der wenigstens die aktuelle Bewegungsgeschwindigkeit und die durch die anderen geschwindigkeitsbezogenen Informationen angezeigte Geschwindigkeit beinhaltet.

10. Computerprogrammprodukt, das eine Bildsteuereinrichtung, die in einem beweglichen Körper installiert ist, veranlasst, die Schritte auszuführen:
Erzeugen von Daten eines Anzeigebildes, in dem eine aktuelle Bewegungsgeschwindigkeit des beweglichen Körpers zusammen mit anderen geschwindigkeitsbezogenen Informationen auf einem Geschwindigkeitsmessgerät (31) angezeigt wird, das gleichmäßig beabstandete Skalenmarkierungen (35) umfasst; und
Ändern eines Anzeigemodus in Bezug auf eine Differenz zwischen der aktuellen Bewegungsgeschwindigkeit und einer Geschwindigkeit, die durch die anderen geschwindigkeitsbezogenen Informationen angezeigt wird, wenn erkannt wird, dass eine vorbestimmte Bedingung erfüllt wird;
**dadurch gekennzeichnet, dass** der Anzeigemodus, der sich auf die Differenz bezieht, geändert wird, indem die Intervalle zwischen den Skalenmarkierungen (35) an einem Abschnitt erweitert werden, der wenigstens die aktuelle Bewegungsgeschwindigkeit und die durch die anderen geschwindigkeitsbezogenen Informationen angezeigte Geschwindigkeit beinhaltet.

## Revendications

1. Appareil de régulation d'image installé dans un corps mobile, l'appareil de régulation d'image comprenant :
un organe de commande (250) conçu pour générer des données concernant une image d'affichage dans laquelle une vitesse de déplacement actuelle du corps mobile est indiquée, conjointement avec d'autres informations relatives à la vitesse, sur un premier objet représentant un indicateur de vitesse (31) comprenant des graduations (35) équidistantes, et conçu en outre pour modifier un mode d'affichage associé à une différence entre la vitesse de déplacement actuelle et une vitesse indiquée par les autres informations relatives à la vitesse, lorsqu'il est détecté qu'une condition prédéterminée est satisfaite,
**caractérisé en ce que** l'organe de commande (250) est conçu en outre pour modifier le mode d'affichage associé à la différence en élargissant les intervalles entre les graduations (35) au niveau d'une section comprenant au moins la vitesse de déplacement actuelle et la vitesse indiquée par les autres informations relatives à la vitesse.

2. Appareil de régulation d'image selon la revendication 1, dans lequel les autres informations relatives à la vitesse concernent une vitesse de référence, dont une vitesse à régulation automatique et/ou une limite de vitesse, et l'organe de commande (250) est conçu en outre pour modifier le mode d'affichage des informations indiquant la différence entre la vitesse de déplacement actuelle et la vitesse de référence.

3. Appareil de régulation d'image selon la revendication 1 ou 2, dans lequel l'organe de commande (250) est conçu en outre pour générer un deuxième objet indiquant la vitesse de déplacement actuelle (32), et un troisième objet (33) représentant les autres informations relatives à la vitesse, et l'organe de commande est conçu en outre pour modifier le mode d'affichage du deuxième objet (32) et/ou du troisième objet (33), lorsqu'il est détecté que la condition prédéterminée est satisfaite.

4. Appareil de régulation d'image selon l'une quelconque des revendications 1 à 3, dans lequel l'organe de commande (250) est conçu pour générer un quatrième objet représentant une échelle et affiche, de manière élargie, les intervalles entre les graduations de l'échelle à proximité de la vitesse de déplacement actuelle ou de la vitesse indiquée par les autres informations relatives à la vitesse, lorsqu'il est détecté que la vitesse de déplacement actuelle dépasse une plage prédéterminée et se rapproche de la vitesse indiquée par les autres informations relatives à la vitesse.

5. Appareil de régulation d'image selon l'une quelconque des revendications 1 à 4, dans lequel la condition prédéterminée est au moins l'une des suivantes :
la vitesse de déplacement actuelle dépasse une plage prédéterminée et s'approche de la vitesse indiquée par les autres informations relatives à la vitesse,
un niveau d'accélération du corps mobile dépasse un niveau prédéterminé,
la vitesse de déplacement actuelle dépasse la vitesse indiquée par les autres informations relatives à la vitesse, et
un occupant du corps mobile effectue une opération.

6. Appareil d'affichage (1) comprenant :
l'appareil de régulation d'image selon la revendication 1, et
un écran conçu pour afficher l'image d'affichage de façon qu'elle soit visible d'un occupant du corps mobile.

7. Appareil d'affichage selon la revendication 6, dans lequel l'écran projette de la lumière qui forme l'image d'affichage sur une zone de projection prédéterminée du corps mobile, de telle façon que l'image d'affichage est visible de l'occupant.

8. Corps mobile dans lequel est installé l'appareil de régulation d'image selon l'une quelconque des revendications 1 à 5.

9. Procédé de régulation d'image réalisé par un appareil de régulation d'image installé dans un corps mobile, le procédé de régulation d'image comprenant les opérations consistant à :
générer des données concernant une image d'affichage dans laquelle une vitesse de déplacement actuelle du corps mobile est indiquée, conjointement avec d'autres informations relatives à la vitesse, sur un indicateur de vitesse (31) comprenant des graduations (35) équidistantes, et
modifier un mode d'affichage associé à une différence entre la vitesse de déplacement actuelle et une vitesse indiquée par les autres informations relatives à la vitesse, lorsqu'il est détecté qu'une condition prédéterminée est satisfaite,
**caractérisé en ce que** le mode d'affichage associé à la différence est modifié par élargissement des intervalles entre les graduations (35) au niveau d'une section comprenant au moins la vitesse de déplacement actuelle et la vitesse indiquée par les autres informations relatives à la vitesse.

10. Produit-programme informatique qui amène un appareil de régulation d'image installé dans un corps mobile à exécuter les étapes suivantes consistant à :
générer des données concernant une image d'affichage dans laquelle une vitesse de déplacement actuelle du corps mobile est indiquée, conjointement avec d'autres informations relatives à la vitesse, sur un indicateur de vitesse (31) comprenant des graduations (35) équidistantes, et
modifier un mode d'affichage associé à une différence entre la vitesse de déplacement actuelle et une vitesse indiquée par les autres informations relatives à la vitesse, lorsqu'il est détecté qu'une condition prédéterminée est satisfaite,
**caractérisé en ce que** le mode d'affichage associé à la différence est modifié par élargissement des intervalles entre les graduations (35) au niveau d'une section comprenant au moins la vitesse de déplacement actuelle et la vitesse indiquée par les autres informations relatives à la vitesse.
